# EUROPEAN PATENT SPECIFICATION

(11) **EP 0 442 862 B1**
(45) Date of publication and mention of the grant of the patent: **11.08.1993**
(21) Application number: 91870024.6
(22) Date of filing: 14.02.1991
(51) Int. Cl.: A01M 7/00, B05B 3/10, B05B 13/04, B05B 15/04

(54) **Spray shield unit**
Abschirmung für Sprühvorrichtung
Blindage pour dispositif de pulvérisation

(30) Priority: 16.02.1990 US 481099
(43) Date of publication of application: 21.08.1991
(73) Proprietor: NOMIX-CHIPMAN LIMITED, Staple Hill, Bristol BS16 4PS (GB)
(72) Inventor: Iwaszkowiec, Carlos, St Peters, Missouri 63376 (US)
(74) Representative: Cheyne, John Robert Alexander Mackenzie

(56) References cited:
- DE-A- 3 718 834
- GB-A- 1 152 847
- US-A- 3 267 610
- US-A- 4 609 148

## Description

This invention relates generally to spraying apparatus for applying herbicides, for example, and more particularly to a unit which is adapted to be releasably mounted on the head of a sprayer for shielding spray emitted by the sprayer from the wind, and for enabling a more uniform relatively narrow-width distribution of the spray on the ground.

This invention has particular (albeit not exclusive) application to sprayers of the type shown in Gill U.S. patent 4,609,148 where the sprayer comprises a relatively long tube connected at one end to a supply of liquid to be sprayed, a spray head at the other end of the tube, and a rotatable disc or spinner mounted on the head for spraying liquid generally radially outwardly relative to the axis of rotation of the spinner. In use, a sprayer of this type is typically held in a position where the axis of the spinner is generally vertical so that the liquid being sprayed is flung outwardly in a generally circular horizontal pattern. While the sprayer is typically adjustable to vary the diameter of this pattern, it has heretofore not been adjustable to provide a very small-diameter pattern (e.g., two inches or less) useful in spraying sidewalk cracks and in edging. One solution to this problem is to hold the tube so the spinner axis is generally horizontal and liquid is flung outwardly by the spinner in a generally vertical plane with the spray pattern having a horizontal dimension or width of about two inches or less. However, this pattern is especially susceptible to being blown sideways by the wind, which could result in application of the liquid to areas where it is undesirable.

GB-A-1 152 847 relates to an applicator of liquid herbicide to weed whilst at the same time preventing the liquid from falling onto growing plants. Said applicator comprises two elongated support members connected pivotally between their ends, each support member bearing a shield at one end and a handle at the other end, said applicator incorporating a nozzle capable of directing at least one stream of liquid herbicide between the shields.

### Summary of the Invention

Among the several objects of this invention may be noted the provision of a spray shield unit for removable mounting on the spray head of a sprayer of the type described above; the provision of such a unit which effectively shields the spray emitted by the sprayer from the wind, thereby enabling a more controlled application of the spray; the provision of such a unit which is capable of maintaining the spray head a fired distance from the ground to provide for a more uniform distribution of the spray onto the area being sprayed; the provision of such a unit which is readily applied to and removable from the head of a sprayer; the provision of such a unit which is safe and efficient to use; and the provision of such a unit which is relatively economical to manufacture.

Briefly, a spray shield unit of the present invention is adapted to be mounted on the head of a sprayer where the head has a spinner thereon rotatable about an axis for spraying liquid generally radially outwardly with respect to the axis. The spray shield unit comprises a hub having an opening therein for receiving the head of the sprayer. The hub opening has a central axis generally parallel to or coincident with the spinner axis when the head of the sprayer is received in the hub opening. The unit also includes a generally planer circular shield member mounted on the hub generally coaxially with the hub and projecting radially outwardly from the hub for shielding spray emitted by the spinner from the wind. The shield member is rotatable on the hub generally on the central axis of the hub opening whereby when the spray shield unit is mounted on the head of the sprayer and when the sprayer is held with the spinner axis generally horizontal, the shield member may be rolled on the ground to maintain the head of the sprayer in the hub opening a fired vertical distance from the ground to provide a uniform distribution of spray onto the ground.

Other objects and features will be in part apparent and in part pointed out hereinafter.

### Brief Description of the Drawings

Fig. 1 is a sectional view showing a spray shield unit of the present invention mounted on the head of a sprayer;
Fig. 2 is an elevational view of Fig. 1 showing the shield unit; and
Fig. 3 is a view showing the sprayer held in a different orientation.

Corresponding parts are designated by corresponding reference numerals throughout the several views of the drawings.

### Description of the Preferred Embodiment

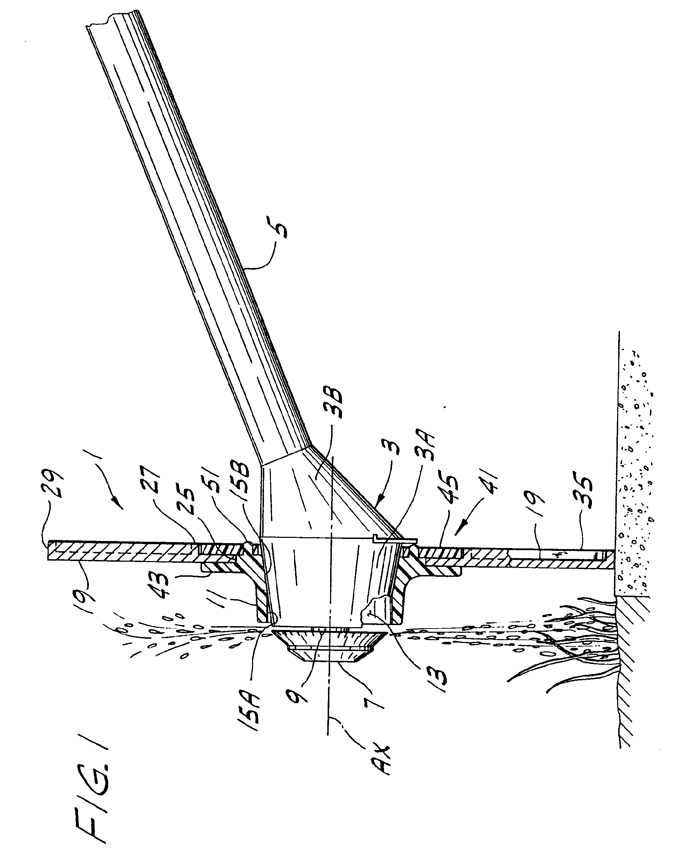

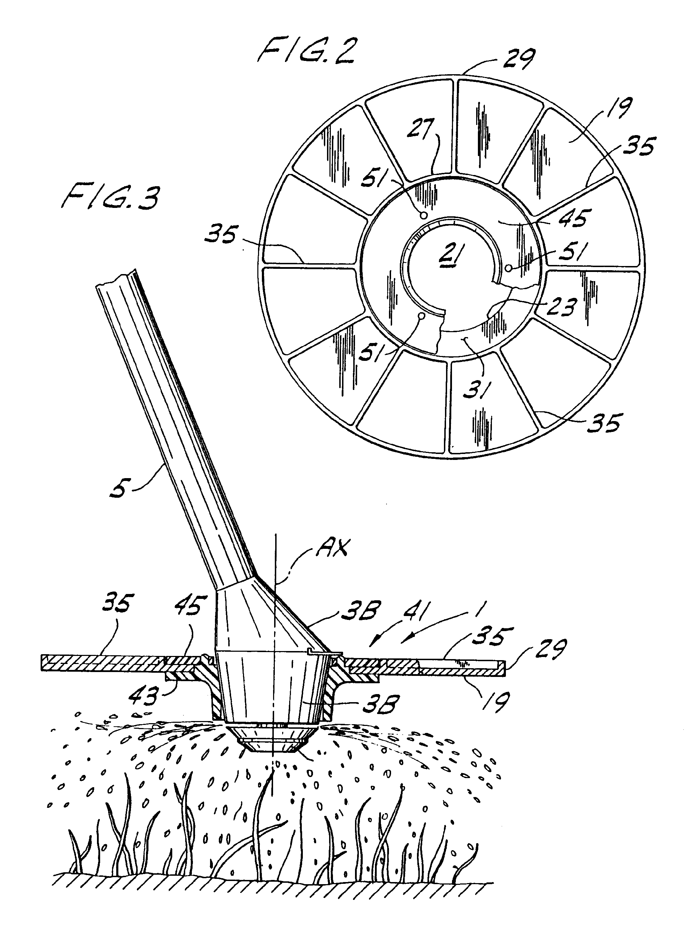

Referring now to the drawings, and first more particularly to Fig. 1, a spray shield unit of the present invention, indicated in its entirety at 1, is shown mounted on the spray head 3 at one end of a spray tube 5 of a sprayer. As shown, the spray head has a frustum-shaped front section 3A and a tapered rear transitional section 3B interconnecting the lower end of the tube 5 and the front section 3A. A spinner 7 in the form of a circular concave disc is mounted on a shaft 9 projecting forward from the head for rotation about an axis AX which is generally coaxial with the front section 3A of the head. The shaft 9 and spinner 7 thereon are rotated at high speeds by a suitable mechanism (not shown). Liquid to be sprayed (e.g., herbicide) is suitably delivered from the head to the spinner and flung generally radially outwardly (relative to axis AX) from the spinner in a generally circular spray pattern. In normal use, the sprayer is held in a position where the axis AX of the spinner is generally vertical, as shown in Fig. 3, so that spray from the spinner is flung generally horizontally outwardly in a circular pattern. When used in this fashion, the spray pattern is of relatively large diameter (six inches or more) and thus inappropriate for narrow-width (two inches or less) applications, such as spraying sidewalk cracks and edging. It has been found, however, that if the sprayer is used in a position where the axis AX is generally horizontal, as shown in Fig. 1, a narrow-width pattern of spray may be dispensed. The spray shield unit 1 of this invention is particularly useful when the sprayer is used in this manner for shielding the vertical spray pattern from the wind to prevent undesirable sideways blowing of the spray.

The shield unit 1 comprises a tubular hub 11 of molded plastic, for example, having an opening 13 therethrough for receiving the front section 3A of the head of the sprayer. The hub opening 13 has a central axis generally parallel to or coincident with the spinner axis AX (they are illustrated as being coincident) when the head of the sprayer is received in the hub opening 13. The inside wall of the hub has two sections, a generally cylindric front section 15A and a tapered rear section 15B which is adapted for a sliding friction fit with the outer surface of the front section 3A of the spray head to removably mount the shield unit on the spray head. The exterior of the spray head and/or inside wall of the hub may be provided with gripping elements (e.g., ribs or dimples) for increasing the holding power between these two surfaces.

The unit also comprises a generally planar shield member 19 in the form of a circular disc or wheel having a central circular opening 21 therein bounded by an inner edge 23 which is rotatably engageable with a cylindric bearing surface 25 on the hub. The shield member 19 has inner and outer circular rims 27, 29 projecting rearwardly therefrom generally concentric with the opening, the inner rim being spaced radially outwardly from the inner edge 23 of the opening to define an annular space indicated at 31. The outer rim 29 defines the outer edge of the disc 19. A plurality of reinforcing ribs 35 extend radially between the two rims 27, 29 at spaced intervals around the disc (see Fig. 2). The shield member 19 is preferably of molded plastic (the same as the hub 11), although it may be of other suitable materials. The shield member preferably has a diameter somewhat greater than the diameter of the smallest-diameter spray pattern capable of being emitted by the spinner 7. For example, if the smallest-diameter spray pattern is six inches, the shield member 19 may have a diameter of eight inches, which will ensure that the entire spray pattern is shielded from the wind when the sprayer is used as shown in Fig. 1.

Means indicated generally at 41 is provided for holding the shield member 19 on the hub 11. This means comprises a pair of annular retainers indicated at 43 and 45 on the hub generally coaxial with the hub and projecting radially outwardly from the hub. The retainers are spaced apart a distance only slightly greater than the thickness of the shield member adjacent the central opening 21 for retaining the shield member therebetween while permitting the shield member to rotate freely on the hub. More specifically, one retainer, indicated at 43, comprises an annular flange integrally formed with the hub and projecting outwardly from the thickened portion of the hub adjacent the rear end of the hub immediately forward of the bearing surface 25. The other retainer, indicated at 45, comprises a separate annular retaining member or ring secured to the hub and received in the annular recess 31 of the shield member. The retaining ring 45 is secured to the hub 11 by means of a plurality of locking pins 51 integrally formed with the hub and projecting rearwardly therefrom through holes in the ring. The ends of these pins may be deformed (with heat, for example) to prevent their withdrawal from respective openings, thereby securing the ring to the hub and thus holding the shield member 19 in place on the hub. The thickness of the retaining ring 45 is approximately equal to the height of the inner rim 27 on the shield member so that the ring is generally flush with the rim. It will be understood that other suitable means may be used to secure the ring to the hub without departing from the scope of this invention.

In use, the shield unit 1 is installed on the sprayer by sliding the hub 11 on the front section 3A of the spray head 3 until the tapered rear surface 15B of the hub grips the spray head with sufficient force to hold the unit securely on the spray head. After adjusting the sprayer so that the spinner 7 will emit a minimum diameter (e.g., six inch) spray pattern, the sprayer is held in a position where the axis of rotation AX of the spinner is generally horizontal and the outer rim 29 of the shield member 19 is in contact with the ground (or other surface to be sprayed), as shown in Fig. 1. The spinner is then actuated and the person holding the sprayer moves forward, causing the shield member 19 to rotate on the hub 11 with its outer rim in rolling contact with the ground. This ensures that the spray pattern is shielded from blowing sideways by the wind. Moreover, the shield member maintains the head 3 of the sprayer a fixed distance from the ground to provide for a uniform narrow-width distribution of spray onto the ground. The shield unit is also useful when the sprayer is held in more conventional fashion, that is, with the spinner axis AX generally vertical (see Fig. 3). For example, in a situation where vegetation to be controlled underlies the foliage of a plant, the shield member 19 may be positioned between the vegetation and foliage to shield the foliage from the spray. When the shield unit 1 is no longer needed, it is readily removable from the spray head simply by sliding the hub 11 forwardly off the head 3.

In view of the above, it will be seen that the several objects of the invention are achieved and other advantageous results attained.

## Claims

1. A spray shield unit (1) adapted to be mounted on the head of a sprayer (3), said head having a spinner (7) thereon rotatable about an axis (AX) for spraying liquid generally radially outwardly with respect to said axis (AX), characterized in that said spray shield unit comprises:
a hub (11) having an opening (13) therein for receiving the head of the sprayer (3), said hub opening (13) having a central axis generally parallel to or coincident with said spinner (7) axis (AX) when the head of the sprayer (3) is received in the hub opening (13); and
a generally planar circular shield member (19) mounted on the hub (11) generally coaxially with the hub and projecting radially outwardly from the hub for shielding spray emitted by the spinner (7) from the wind; said shield member (19) being rotatable on the hub (11) generally about the central axis of the hub opening (13).

2. A spray shield unit (1) as set forth in claim 1 further comprising means (41) for holding the shield member (19) on the hub (11).

3. A spray shield unit (1) as set forth in claim 2 wherein said shield member (19) is annular in shape, having a generally circular inner edge (23), engageable with the hub (11) and a generally circular outer edge (29).

4. A spray shield unit (1) as set forth in claim 3 wherein said means (41) for holding the shield member (19) on the hub (11) comprises a pair of annular retainers (43,45) on the hub (11) generally coaxial with the hub (11) and projecting radially outwardly from the hub (11), said retainers (43,45) being spaced apart a distance only slightly greater than the thickness of the shield member (19) for retaining the shield member (19) therebetween while permitting the shield member (19) to rotate freely on the hub (11).

5. A spray shield unit (1) as set forth in claim 4 wherein one retainer (43) comprises an annular flange integrally formed with the hub (11) and the other retainer (45) comprises an annular retaining member secured to the hub (11).

6. A spray shield unit (1) as set forth in claim 5 wherein said hub (11) has a plurality of pins (51) projecting through holes in said annular retaining member (45) thereby to secure the retaining member (45) to the hub (11).

7. A spray shield unit (1) as set forth in claim 1 wherein said hub (11) and shield member (19) are of molded plastic.

8. A sprayer comprising a spray head (3) having a spinner (7) thereon rotatable about an axis (AX) for spraying liquid generally radially outwardly with respect to said axis (AX), said spray head (3) being equipped with a spray shield unit (1) as claimed in any of claims 1-7.

9. Use of a spray shield unit (1) according to any of claims 1-7 or of a sprayer equiped with such a spray shield unit as claimed in Claim 8, characterized in that when the spray shield unit (1) is mounted on the head (3) of the sprayer and when the sprayer is held with the spinner axis (AX) generally horizontal, the shield member (19) may be rolled on the ground to maintain the head of the sprayer (3) in the hub opening (13) at fixed vertical distance from the ground.

## Patentansprüche

1. Sprühstrahl-Abschirmeinheit (1), die geeignet ist, am Kopf einer Sprühvorrichtung (3) angebracht zu werden, welcher Kopf eine Drehscheibe (7) darauf aufweist, die um eine Achse (AX) drehbar ist, zum Sprühen von Flüssigkeit allgemein radial auswärts in bezug auf die Achse (AX), dadurch gekennzeichnet, daß die Sprühstrahl-Abschirmeinheit umfaßt:
eine Nabe (11) mit einer Öffnung (13) darin zum Aufnehmen des Kopfs der Sprühvorrichtung (3), welche Nabenöffnung (13) eine Mittelachse allgemein parallel zu oder zusammenfallend mit der Achse (AX) der Drehscheibe (7) aufweist, wenn der Kopf der Sprühvorrichtung (3) in der Nabenöffnung (13) aufgenommen ist; und
ein allgemein ebenes kreisförmiges Abschirmglied (19), das an der Nabe (11) allgemein koaxial mit der Nabe und von der Nabe radial auswärts abstehend angebracht ist, um einen von der Drehscheibe (7) abgegebenen Sprühstrahl vom Wind abzuschirmen; welches Abschirmglied (19) an der Nabe (11) allgemein um die Mittelachse der Nabenöffnung (13) drehbar ist.

2. Sprühstrahl-Abschirmeinheit (1) nach Anspruch 1, welche ferner ein Mittel (41) zum Halten des Abschirmglieds (19) an der Nabe (11) aufweist.

3. Sprühstrahl-Abschirmeinheit (1) nach Anspruch 2, bei welcher das Abschirmglied (19) eine ringförmige Gestalt aufweist, wobei es einen allgemein kreisförmigen inneren Rand (23), der mit der Nabe (11) in Eingriff bringbar ist, und einen allgemein kreisförmigen äußeren Rand (29) hat.

4. Sprühstrahl-Abschirmeinheit (1) nach Anspruch 3, bei welcher das Mittel (41) zum Halten des Abschirmglieds (19) an der Nabe (11) ein Paar ringförmige Halter (43, 45) an der Nabe (11) aufweist, die mit der Nabe (11) allgemein koaxial sind und von der Nabe (11) radial auswärts abstehen, welche Halter (43, 45) in einem Abstand voneinander vorliegen, der nur geringfügig größer ist als die Dicke des Abschirmglieds (19), um das Abschirmglied (19) dazwischen festzuhalten, während es dem Abschirmglied (19) ermöglicht wird, sich an der Nabe (11) frei zu drehen.

5. Sprühstrahl-Abschirmeinheit (1) nach Anspruch 4, bei welcher ein Halter (43) einen ringförmigen Flansch aufweist, der in einem Stück mit der Nabe (11) gebildet ist, und der andere Halter (45) ein ringförmiges Halteglied aufweist, das an der Nabe (11) befestigt ist.

6. Sprühstrahl-Abschirmeinheit (1) nach Anspruch 5, bei welcher die Nabe (11) eine Mehrzahl von Stiften (51) aufweist, die durch Löcher im ringförmigen Halteglied (45) vorstehen, um dadurch das Halteglied (45) an der Nabe (11) zu befestigen.

7. Sprühstrahl-Abschirmeinheit (1) nach Anspruch 1, bei welcher die Nabe (11) und das Abschirmglied (19) aus Preßmasse bestehen.

8. Sprühvorrichtung mit einem Sprühkopf (3), welcher darauf eine Drehscheibe (7) aufweist, die um eine Achse (AX) drehbar ist, zum Sprühen von Flüssigkeit allgemein radial auswärts in bezug auf die Achse (AX), welcher Sprühkopf (3) mit einer Sprühstrahl-Abschirmeinheit (1) nach einem der Ansprüche 1 bis 7 ausgerüstet ist.

9. Verwendung einer Sprühstrahl-Abschirmeinheit (1) nach einem der Ansprüche 1 bis 7 oder einer mit einer derartigen Sprühstrahl-Abschirmeinheit ausgerüsteten Sprühvorrichtung nach Anspruch 8, dadurch gekennzeichnet, daß, wenn die Sprühstrahl-Abschirmeinheit (1) am Kopf (3) der Sprühvorrichtung angebracht ist, und wenn die Sprühvorrichtung mit der Drehscheibenachse (AX) allgemein horizontal gehalten wird, das Abschirmglied (19) am Boden gerollt werden kann, um den Kopf der Sprühvorrichtung (3) in der Nabenöffnung (13) in einem festgelegten vertikalen Abstand vom Boden zu halten.

## Revendications

1. Dispositif d'écran de pulvérisation (1), adapté pour être monté sur la tête d'un pulvérisateur (3), ladite tête comportant un épandeur rotatif (7) monté sur celle-ci de manière à pouvoir tourner autour d'un axe (AX) en vue de pulvériser du liquide, dans une direction orientée sensiblement radialement vers l'extérieur par rapport au dit axe (AX), caractérisé en ce que ledit écran pour dispositif de pulvérisation comprend :
un moyeu (11) présentant en son sein une ouverture (13) destinée à recevoir la tête du pulvérisateur (3), ladite ouverture de moyeu (13) ayant un axe central orienté sensiblement parallèlement à, ou coïncidant avec, l'axe (AX) dudit épandeur rotatif (7), lorsque la tête du pulvérisateur (3) est logée dans l'ouverture de moyeu (13); et
un écran (19) circulaire et sensiblement plan, monté sur le moyeu (11), sensiblement coaxial par rapport au moyeu et faisant saillie radialement vers l'extérieur du moyeu, pour mettre à l'abri du vent le jet pulvérisé émis par l'épandeur rotatif (7);
ledit écran (19) étant capable de tourner sur le moyeu (11), sensiblement autour de l'axe central de l'ouverture de moyeu (13).

2. Dispositif d'écran de pulvérisation (1) selon la revendication 1 comprenant en outre un moyen (41) pour maintenir l'écran (19) sur le moyeu (11).

3. Dispositif d'écran de pulvérisation (1) selon la revendication 2, dans lequel ledit écran (19) est de forme annulaire, ayant un bord intérieur (23) généralement circulaire, capable d'être mis en prise avec le moyeu (11), et un bord extérieur (29) généralement circulaire.

4. Dispositif d'écran de pulvérisation (1) selon la revendication 3, dans lequel ledit moyen (41) destiné à maintenir l'écran (19) sur le moyeu (11) comprend une paire d'organes de retenue annulaires (43, 45), montés sur le moyeu (11) de façon sensiblement coaxiale par rapport au moyeu (11) et faisant saillie radialement vers l'extérieur du moyeu (11), lesdits organes de retenue (43, 45) étant espacés entre eux d'une distance seulement légèrement supérieure à l'épaisseur de l'écran (19) en vue de retenir entre eux l'écran (19), tout en permettant à l'écran (19) de tourner librement sur le moyeu (11).

5. Dispositif d'écran de pulvérisation (1) selon la revendication 4, dans lequel un premier organe de retenue (43) comprend une bride annulaire, formée d'un seul tenant avec le moyeu (11), et l'autre organe de retenue (45) comprend un organe de retenue annulaire fixé au moyeu (11).

6. Dispositif d'écran de pulvérisation (1) selon la revendication 5, dans lequel ledit moyeu (11) présente une pluralité de tiges (51), faisant saillie à travers des trous ménagés dans ledit organe de retenue (45), de manière à fixer l'organe de retenue (45) sur le moyeu (11).

7. Dispositif d'écran de pulvérisation (1) selon la revendication 1, dans lequel ledit moyeu (11) et ledit écran (19) sont en matière plastique moulée.

8. Pulvérisateur comprenant une tête de pulvérisation (3) comportant un épandeur rotatif (7), monté sur celle-ci de manière à pouvoir tourner autour d'un axe (AX), pour pulvériser du liquide dans une direction orientée sensiblement radialement vers l'extérieur par rapport audit axe (AX), ladite tête de pulvérisation (3) étant équipée d'un dispositif d'écran de pulvérisation (1) selon l'une quelconque des revendications 1 à 7.

9. Utilisation d'un dispositif d'écran de pulvérisation selon l'une quelconque des revendications 1 à 7 ou d'un pulvérisateur équipé d'un tel dispositif d'écran de pulvérisation selon la revendication 8, caractérisé en ce que, lorsque le dispositif d'écran de pulvérisation (1) est monté sur la tête (3) du pulvérisateur et lorsque le pulvérisateur est maintenu avec l'axe d'épandeur rotatif (AX) sensiblement horizontal, l'écran (19) peut être roulé sur le sol, pour maintenir la tête du pulvérisateur, dans l'ouverture de moyeu (13), à une distance verticale fixe du sol.
